# EUROPEAN PATENT APPLICATION

(11) **EP 2 532 635 A1**
(43) Date of publication of application: **12.12.2012**
(21) Application number: 12161044.8
(22) Date of filing: 23.03.2012
(51) Int. Cl.: C04B 35/111, C04B 35/14, C04B 35/486, C04B 35/565, C04B 35/626, B28B 1/08, B28B 3/02, C04B 33/10

(54) **A method for manufacturing a ceramic product through vacuum vibration pressing**

(30) Priority: 10.06.2011 KR 20110056038
(71) Applicant: Samsung Electronics Co., Ltd., Suwon-si, Gyeonggi-do, 443-742 (KR)
(72) Inventor: Bae, Ah Hyun, Gyeonggi-do (KR); Yoon, Hye Ran, Gyeonggi-do (KR); Lee, Kyo Ree, Seoul (KR); Pee, Jae Hwan, Gyeonggi-do (KR); Yang, Hee Seung, Seoul (KR)
(74) Representative: Walaski, Jan Filip

(57) **Abstract**

A method is disclosed for manufacturing a ceramic product without a sintering process, which requires no removal of binder to ensure favorable brittle fracture resistance of the ceramic product. The method includes mixing a ceramic powder with an additive and a binder to prepare S120 a ceramic powder mixture, and treating 8130 the ceramic powder mixture through vacuum vibration pressing, to thereby form a ceramic product. The ceramic powder may include a fused ceramic powder prepared by heating the ceramic material to a melting point of the ceramic material or higher to fuse the same, cooling the fused material, and milling the cooled material.

## Description

The present invention relates to a method for manufacturing a ceramic product, such as a ceramic product which is used for an outer morphology of an article.

A method for manufacturing a ceramic product, that is, ceramic processing, means a method to produce a ceramic product using a ceramic material.

A ceramic product is typically a product manufactured using a non-metallic inorganic material through thermal processing.

In the related art, ceramic processing may include sintering. Such sintering refers to a process that includes forming a ceramic powder into a desired shape and heating the shaped material to enable coarsening and/or densification thereof, resulting in a reinforced ceramic product.

The foregoing reinforcing occurs when ceramic particles are combined at a contact side thereof and polymerized, to thereby form a solid-sintered agglomerate.

Here, the coarsening refers to a process of heating a ceramic powder shaped article, which has pores in large quantities, to derive inter-particle bonding without change in density, to thereby decrease surface area while increasing strength of the shaped article. On the other hand, densification is a process of heating a ceramic powder shaped article to impart increased density, decreased surface area and increased strength to the shaped article.

The ceramic product obtained, after sintering, may have a desired strength, although problems associated with brittleness (or fracturing) are encountered. Brittleness means fracture of a material occurring without substantial plastic deformation thereof, when external force is applied to the material.

In order to improve brittleness of the ceramic product, a material having favorable impact resistance may be added and blended with a ceramic material. However, there is still no binder that can endure the sintering temperature. Therefore, according to the related art, the ceramic powder is typically subjected to a de-binding process to remove the binder blended with the ceramic powder.

An object of the invention, at least in preferred embodiments, is to provide a method for manufacturing a ceramic product, without a sintering process that is required to remove a binder and to thus ensure brittle fracture resistance of the ceramic product. Additional aspects and/or advantages will be set forth in part in the description which follows and, in part, will be apparent from the description, or may be learned by practice of the disclosure.

A method to manufacture a ceramic product according to an aspect of the invention includes mixing a ceramic powder with an additive and a binder; and treating the ceramic powder mixture through vacuum vibration pressing, to thereby form the ceramic product.

The ceramic powder may include a ceramic powder resulting from thermal processing. The ceramic powder may include a fused ceramic powder obtained by heating a ceramic material to a melting point of the ceramic material or higher to fuse the material, cooling the fused material, and milling the material into a powder form.

The ceramic powder may include at least one selected from the group consisting of SiO₂, Al₂O₃, SiC, Zr02 and chromium-manganese.

The additive may include an additive to color the ceramic product. The additive may include transition metals.

The binder may include at least one selected from the group consisting of polyester, polyimide, polypropylene and polystyrene.

A method to manufacture a ceramic product according to another aspect of the invention may include mixing a ceramic powder with an additive and a binder to prepare a ceramic powder mixture; treating the ceramic powder mixture through vacuum vibration pressing to obtain a shaped article having a desired shape; curing the shaped article to combine the ceramic powder, additive and binder; and polishing the surface of the shaped article to obtain a glossy surface.

The foregoing method may further include heating the ceramic material to a melting point of the ceramic material or higher to fuse the same, cooling the fused material, and milling the cooled material into the ceramic powder described above.

The foregoing method may also include separating large particles from the milled ceramic powder through screening, and removing foreign metal substances from the ceramic powder.

The ceramic powder may include a ceramic powder resulting from thermal processing. The ceramic powder may include a fused ceramic powder obtained by heating the ceramic material to a melting point of the ceramic material or higher to fuse the same, cooling the fused material, and milling the cooled material into a powder form.

The ceramic powder may include at least one selected from the group consisting of SiO₂, Al₂O₃, SiC, Zr02 and chromium-manganese.

The additive may include an additive to color the ceramic product. The additive may include transition metals.

The binder may include at least one selected from the group consisting of polyester, polyimide, polypropylene and polystyrene.

A method to manufacture a ceramic product according to another aspect of the invention may include mixing a fused ceramic powder with a binder; and treating the fused ceramic powder mixture through vacuum vibration pressing to form a ceramic product.

The foregoing method may further include addition of an additive to the fused ceramic powder.

A method to manufacture a ceramic product according to a still further aspect of the invention may include heating a ceramic material to a melting point of the ceramic material or higher to fuse the same; cooling the fused material; milling the cooled material into a ceramic powder; adding a binder to the ceramic powder to prepare a ceramic powder mixture; and treating the ceramic powder mixture through vacuum vibration pressing to form a ceramic product.

The foregoing method may further include; separating large particles from the milled ceramic powder through screening; and removing foreign metal substances from the ceramic powder.

The foregoing method may also include addition of an additive to the ceramic powder, to thereby prepare the ceramic powder mixture described above.

These and/or other aspects of the embodiments will become apparent and more readily appreciated from the following description of the embodiments, taken in conjunction with the accompanying drawings of which:
FIG. 1 is a block diagram illustrating respective processes of a method for manufacturing a ceramic product according to one embodiment of the present disclosure;
FIG. 2 is a block diagram illustrating a process of preparing a fused ceramic powder included in a method for manufacturing a ceramic product according to another embodiment of the present disclosure;
FIG. 3A shows a ceramic powder obtained after powder distribution (or classification);
FIG. 3B shows a ceramic powder mixture; and
FIG. 3C shows a shaped article in vacuum vibration press operation.

Hereinafter, preferred embodiments of the present disclosure will be described in detail with reference to the accompanying drawings.

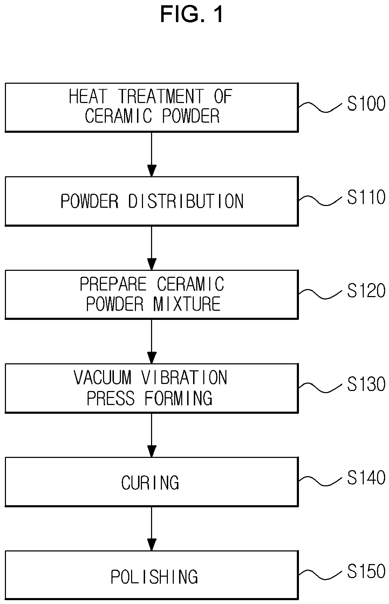

FIG. 1 is a block diagram illustrating respective processes of a method for manufacturing a ceramic product according to one embodiment of the present disclosure.

As shown in FIG. 1, the method for manufacturing a ceramic product includes heat treatment of a ceramic powder S100; powder distribution S110; preparation of a ceramic powder mixture S120; vacuum vibration pressing S130; curing S140; and polishing S150.

Other than the foregoing operations, additional operations possibly implemented by those skilled in the art may also be included.

A ceramic powder 10 used to form a ceramic product by the foregoing method may be prepared by milling a ceramic material. The ceramic material may include SiO₂, Al₂O₃, SiC, Zr02 and/or chromium-manganese.

The heat treatment S100 of the ceramic powder may be a process to remove material defects by heating the ceramic powder.

After the heat treatment S100 of the ceramic powder, the ceramic powder may have constant and homogeneous material characteristics and be used to manufacture a ceramic product, which in turn, improves quality of the ceramic product.

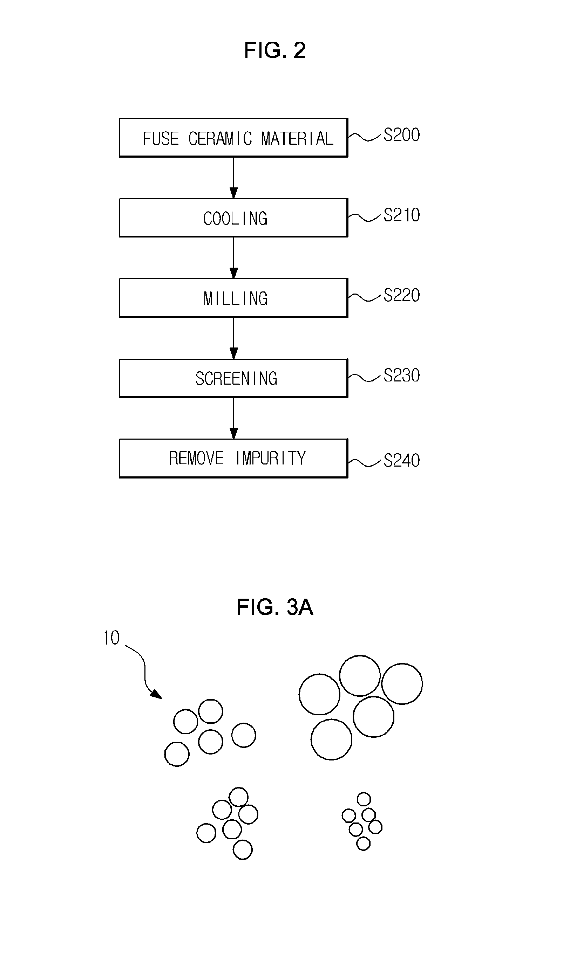

The following description will be given to explain a method for manufacturing a fused ceramic, wherein a ceramic powder has improved physical properties, with reference to FIG. 2.

Again referring to FIG. 1, powder distribution (or classification) may be executed after heat treatment S100 of the ceramic powder. The powder distribution S110 is adopted to separate particles of the ceramic powder based on size and then utilize only the ceramic powder composed of particles having desired size in manufacturing the ceramic product. The size of the ceramic powder particles must be constant in order to provide stable condition without fracture of the ceramic product and/or ceramic shaped article.

Next, operation S120 for preparation of a ceramic powder mixture is conducted by adding an additive 11 and a binder 12 to the distributed ceramic powder and blending the mixture, so as to prepare a ceramic powder mixture 1.

In order to form a shaped ceramic product, a variety of additives 11 may be added. The additive 11 may include an additive to impart color to the ceramic product. The additive 11 may include transition metals.

The binder 12 is a material to facilitate agglomeration of particles in a powder state, before coarsening or densification thereof, which in turn, enables formation of the ceramic powder mixture 1 into a shaped product. In a broad sense, the binder 12 may belong to additives.

Since the binder 12 cannot endure high temperatures for sintering, it is generally removed after formation and before sintering according to the related art. On the contrary, the present embodiment describes a method for manufacturing a ceramic product without requiring a sintering process and, therefore, does not require removal of the binder. The binder 12 remains in the ceramic product even after completion thereof, to thereby improve impact resistance, brittle fracture resistance, or the like.

The binder 12 may include at least one selected from polyester, polyimide, polypropylene and polystyrene.

Using the prepared ceramic powder mixture 1, vacuum vibration pressing S130 is executed. Through the vacuum vibration pressing S130, the ceramic powder mixture is formed into a shaped article 2 having a desired shape of the ceramic product. The shaped article 2 resulting from the vacuum vibration pressing S130 may have satisfactory strength even without sintering. The vacuum vibration pressing S130 is an operation that implements existing compression molding while applying vibration under vacuum. According to the foregoing operation, the powder, additive and binder contained in the ceramic powder mixture 1 are compressed and formed into a shaped product and, at the same time, an inter-particle filling rate is increased owing to compression and vibration.

The vacuum vibration pressing S130 does not include a sintering process and, therefore, may include addition of the binder 12 as described above. Moreover, since inter-particle bonding does not occur during sintering, a size of the shaped article 2 is not changed. Furthermore, because of no change in a size of the shaped article 2, size processing of the shaped article 2 after sintering is not required.

Curing S140 is a process that combines the ceramic powder 10, additive 11 and binder 12 in the shaped article 2 resulting from the vacuum vibration pressing S130, to thereby enable the ceramic product to have a suitable strength. The curing S140 may include a process generally used in the manufacture of ceramic products.

Polishing S150 may be a process to polish the surface of the shaped article 2. The polishing S150 may include, for example, a polishing process using sandpaper, nonwoven fabric or an abrasive agent.

FIG. 2 is a block diagram illustrating a process of preparing a fused ceramic powder included in a method for manufacturing a ceramic product according to another embodiment of the present disclosure.

A process to prepare the fused ceramic powder may be one type of the heat treatment S100 of the ceramic powder shown in FIG. 1. The fused ceramic powder may not undergo the heat treatment S100 of the ceramic powder.

The fused ceramic powder prepared by respective processes shown in FIG. 2 may have a uniform (homogeneous) and strong bonding structure. A ceramic product formed using the fused ceramic powder by the method for manufacturing a ceramic product shown in FIG. 1 is observed to have reduced defects but high strength.

Ceramic material fusion S200 means a process of melting unprocessed ceramic material in a furnace. First, the ceramic material is placed in the furnace and heated to a melting point of the ceramic material or higher, to thereby fuse the material.

Cooling S210 is a process of placing the fused ceramic material in a mold and cooling the same, to allow the material to be hardened.

Milling S220 is a process of forming the cold ceramic material into a powder form. The milling S220 may include primary crushing of the ceramic material by cemented carbide alloy and then ball milling the crushed material by means of an alumina ball. Alternatively, the milling S220 may include any general milling process used in the manufacture of ceramic powder, other than the foregoing method.

The ceramic powder resulting from the milling S220 is subjected to screening S230 to separate or filter out uncrushed large particles during the milling S220.

After screening S230, the treated ceramic powder undergoes impurity removal S240 to remove foreign metal substances from the ceramic powder. The impurity removal S240 may include a method for removal of foreign materials by magnetic force.

In the case where the fused ceramic powder prepared according to the process for preparation of a fused ceramic powder shown in FIG. 2 is used in the method for manufacturing a ceramic product shown in FIG. 1, the ceramic powder has improved brittle fracture resistance, as compared to a ceramic powder produced by general heat treatment.

FIG. 3A shows a ceramic powder resulting from powder distribution. Particles of the ceramic powder 10 may be arranged according to size during the powder distribution S110.

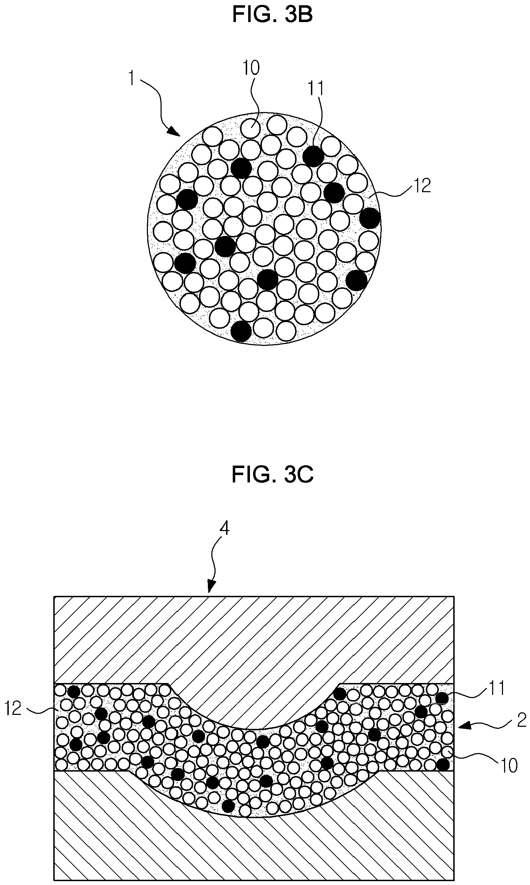

FIG. 3B shows a ceramic powder mixture. The ceramic powder mixture 1 may be prepared by adding the additive 11 and the binder 12 to the ceramic powder 10. The additive 11 may include an additive to impart colors to the ceramic product, which is the same as described above. The binder 12 may allow particles of the ceramic powder mixture 1 to be agglomerated, which in turn, enables formation of a shaped product. Moreover, the binder may improve brittle fracture resistance of the ceramic product.

FIG. 3C shows a shaped article in vacuum vibration press operation. The ceramic powder mixture 1 is formed into a shaped article 2 as a ceramic product by a vacuum vibration press 4. The ceramic powder 10, additive 11 and binder 12 may fill the shaped article 2 at high density. Since sintering is not conducted after compression molding, the ceramic product may have a shape and size obtained by the vacuum vibration press 4.

As is apparent from the foregoing description, since vacuum vibration pressing is applied to manufacture a ceramic product, a sintering process may be omitted. Also, a binder may be added during formation of the ceramic product, to thereby ensure favorable brittle fracture resistance of the ceramic product.

In addition, since the sintering process is omitted, a variety of additives may be added to the ceramic powder mixture and, therefore, various colors may be realized on the ceramic product.

Moreover, the ceramic product manufactured according to embodiments of the present disclosure may have a low density, to thereby enable reduction in weight of the ceramic product.

Although preferred embodiments of the present disclosure have been described above with reference to the accompanying drawings, it will be appreciated by those skilled in the art that various substitutions, variations and/or modifications may be made in these embodiments without departing from the scope of the invention, which is defined by the claims.

## Claims

1. A method for manufacturing a ceramic product, comprising:
mixing a ceramic powder with an additive and a binder to prepare a ceramic powder mixture; and
treating the ceramic powder mixture through vacuum vibration pressing, to thereby form a ceramic product.

2. The method according to claim 1, wherein the ceramic powder includes a ceramic powder resulting from heat treatment.

3. The method according to claim 1 or 2, wherein the ceramic powder includes a fused ceramic powder prepared by heating the ceramic material to a melting point of the ceramic material or higher to fuse the same, cooling the fused material, and milling the cooled material into a powder form.

4. The method according to claim 1, 2 or 3, wherein the ceramic powder includes at least one selected from SiO₂, Al₂O₃, SiC, Zr02 and chromium-manganese.

5. The method according to any preceding claim, wherein the additive includes an additive to impart color to the ceramic product.

6. The method according to any preceding claim, wherein the additive includes transition metals.

7. The method according to any preceding claim, wherein the binder includes at least one selected from polyester, polyimide, polypropylene and polystyrene.

8. The method according to claim 1, wherein the ceramic product is a shaped article having a desired shape, and the method further comprises:
curing the shaped article to combine the ceramic powder, additive and binder;
and
polishing the surface of the cured article to obtain a glossy surface.

9. The method according to claim 8, further comprising:
heating the ceramic material to a melting point of the ceramic material or higher, to fuse the same;
cooling the fused material; and
milling the cooled material, to thereby obtain the ceramic powder.

10. The method according to claim 9, further comprising:
separating large particles in the ceramic powder through screening; and
removing foreign metal substances from the ceramic powder.

11. The method according to claim 8, wherein the ceramic powder includes a ceramic powder resulting from heat treatment.

12. The method according to claim 8, wherein the ceramic powder includes a fused ceramic powder prepared by heating the ceramic material to a melting point of the ceramic material or higher to fuse the same, cooling the fused material, and milling the cooled material into a powder form.

13. The method according to any of claims 8 to 12, wherein the additive includes an additive to impart color to the ceramic product.
